(19)

Europäisches Patentamt
European Patent Office
Office européen des brevets

(11) **EP 4 468 213 A1**

(12) **EUROPEAN PATENT APPLICATION**

(43) Date of publication:
**27.11.2024 Bulletin 2024/48**

(21) Application number: **24175763.2**

(22) Date of filing: **14.05.2024**

(51) International Patent Classification (IPC):
**G06N 20/00** (2019.01)     **G06F 9/50** (2006.01)
**G06N 3/092** (2023.01)     **G06N 3/098** (2023.01)

(52) Cooperative Patent Classification (CPC):
**G06N 20/00; G06F 9/5044; G06F 9/505;**
G06F 2209/503; G06N 3/092; G06N 3/098

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.05.2023  FI 20235558**

(71) Applicant: **Nokia Solutions and Networks Oy
02610 Espoo (FI)**

(72) Inventors:
• **FEKI, Afef
Sceaux (FR)**
• **HASSAN, Sakira
Espoo (FI)**

(74) Representative: **Nokia EPO representatives
Nokia Technologies Oy
Karakaari 7
02610 Espoo (FI)**

(54) **COLLABORATIVE EXPLORATION FOR REINFORCEMENT LEARNING**

(57)     A reinforcement learning, RL, management function in a first node is defined and performs:
receiving, from at least one RL agent, information representative of exploration capabilities of the considered RL agent; configuring, based on first information representative of exploration capabilities received from a first RL agent, the first RL agent with first exploration tasks of a first exploration process to be performed by the first RL agent to contribute to a collaborative RL; receiving, from the first RL agent, first exploration results of the first exploration process; and processing the first exploration results and second exploration results of a second exploration process performed by a second RL agent to contribute to the collaborative RL

```
┌─────────────────────────────────────┐
│ Sending a request for obtaining       │～600
│ information representative of          │
│ exploration capabilities to RL agents │
└─────────────────────────────────────┘
              │
              ▼
┌─────────────────────────────────────┐
│ Receiving information representative  │～610
│ of exploration capabilities from RL   │
│ agents                                │
└─────────────────────────────────────┘
              │
              ▼
┌─────────────────────────────────────┐
│ Determining whether one or more RL    │～620
│ agent have capabilities to contribute │
│ to a collaborative RL                 │
└─────────────────────────────────────┘
              │
              ▼
┌─────────────────────────────────────┐
│ Configuring one or more RL agents     │～630
│ having capabilities to contribute to  │
│ a collaborative RL                    │
└─────────────────────────────────────┘
              │
              ▼
┌─────────────────────────────────────┐
│ Receiving exploration results         │～640
└─────────────────────────────────────┘
              │
              ▼
┌─────────────────────────────────────┐
│ Processing exploration results        │～650
│ including the received exploration    │
│ results                               │
└─────────────────────────────────────┘
              │
              ▼
┌─────────────────────────────────────┐
│ Sending exploration results to at     │～660
│ least one RL agent that has not       │
│ enough capabilities to contribute to  │
│ the collaborative RL                  │
└─────────────────────────────────────┘
```

FIG. 6

EP 4 468 213 A1

**Description**

TECHNICAL FIELD

Various example embodiments relate generally to methods and apparatuses for collaborative reinforcement learning exploration.

BACKGROUND

The deployment of AI/ML solutions using supervised learning has attracted big interest due to its practicality. AI/ML solution are based on a model that should be first trained and then the trained model used directly for inference, which could be tailored for both real time and non-real time cases. However, the supervised learning requires labelled data representing ground truth labels with enough samples and good quality to ensure efficient model training.

Apart from the challenge of ground truth labels, many use cases require sequential decision making which are based on the current data and it is not practical to train at each occurrence.

In this context, reinforcement learning approach is considered where there is no need to gather in advance labelled data and the learning is realized through an exploration / exploitation trade-off.

Reinforcement learning is a machine learning training method based on rewarding desired behaviors and/or punishing undesired ones. In general, a reinforcement learning RL agent is able to perceive and interpret its environment, take actions and learn through trial and error by using an exploration process.

However, during exploration, bad decisions can be made which could decrease the performance of the network. To optimize the exploration for its application to radio telecommunication networks, a compromise has to be found between minimum performance degradation and the gathering of enough knowledge to converge during the exploration phase to be able to keep only the trained model in the exploitation phase (i.e. the inference phase).

SUMMARY

The scope of protection is set out by the independent claims. The embodiments, examples and features, if any, described in this specification that do not fall under the scope of the protection are to be interpreted as examples useful for understanding the various embodiments or examples that fall under the scope of protection.

According to a first aspect, a method for use by a reinforcement learning, RL, management function in a first node may comprise at least one of the following steps: receiving, from at least one RL agent, information representative of exploration capabilities of the considered RL agent; configuring, based on first information representative of exploration capabilities received from a first RL agent, the first RL agent with first exploration tasks of a first exploration process to be performed by the first RL agent to contribute to a collaborative RL; receiving, from the first RL agent, first exploration results of the first exploration process; processing the first exploration results and second exploration results of a second exploration process performed by a second RL agent to contribute to the collaborative RL.

The first RL agent may be configured with the first exploration tasks in response to a determination, based on the first information representative of exploration capabilities received from the first RL agent, that the first RL agent has capabilities to contribute to the collaborative RL.

The method may comprise: selecting, based on the received information representative of exploration capabilities, a RL strategy that defines an algorithm to determine one or more actions to be taken by an RL agent in the context of an exploration process.

The method may comprise: configuring the first RL agent with the selected RL strategy.

When the second exploration process is executed by the second RL agent in the first node, the method may comprise: executing, by the second RL agent in the first node, the second exploration process to generate the second exploration results.

When the second exploration process is executed by the second RL agent in a second node distinct from the first node, wherein the method may comprise: receiving the second exploration results from the second RL agent.

The method may comprise processing the first exploration results and second exploration results is performed to configure further exploration tasks for the first RL agent.

The method may comprise processing the first exploration results and second exploration results includes determining whether a convergence criterion is met for the collaborative RL.

The method may comprise configuring the first agent with further exploration tasks based on a determination that the convergence criterion is not met for the collaborative RL.

The method may comprise processing the first exploration results and second exploration results includes aggregating the first exploration results and the second exploration results to generate aggregated exploration results; and determining whether a convergence criterion is met for the collaborative RL based on the aggregated exploration results.

The method may comprise sending the first, second or aggregated exploration results to the third RL agent in response to a determination, based on second information representative of exploration capabilities received from a third RL agent, that the third RL agent has not enough capabilities to contribute to the collaborative RL.

The method may comprise configuring the first RL agent with at least one reporting rule for exploration results of the first exploration process performed by the first RL agent.

When the at least one RL agent includes a plurality of RL agents in respective distinct nodes, the method may comprise: selecting, based on the information representative of exploration capabilities received from the plurality of network RL agents, RL agents having capabilities to contribute to the collaborative RL, the selected RL agents including the first RL agent and the second RL agent; configuring, based on the information representative of exploration capabilities received from the second RL agent, the second agent with second exploration tasks of the second exploration process to be performed by the second RL agent; receiving the second exploration results from the second RL agent; aggregating exploration results of exploration processes performed by the selected RL agents to generate aggregated exploration results, the aggregated exploration results including the first exploration results and the second exploration results.

The method may comprise: sending, to the at least one RL agent, a request for obtaining information representative of exploration capabilities of the concerned RL agent.

According to another aspect, an apparatus comprises means for performing a method for use by a reinforcement learning, RL, management function in a first node, where the method may comprise at least one of the following steps: receiving, from at least one RL agent, information representative of exploration capabilities of the considered RL agent; configuring, based on first information representative of exploration capabilities received from a first RL agent, the first RL agent with first exploration tasks of a first exploration process to be performed by the first RL agent to contribute to a collaborative RL; receiving, from the first RL agent, first exploration results of the first exploration process; processing the first exploration results and second exploration results of a second exploration process performed by a second RL agent to contribute to the collaborative RL.

The apparatus may comprise means for performing one or more or all steps of the method according to the first aspect. The means may include circuitry configured to perform one or more or all steps of a method according to the first aspect. The means may include at least one processor and at least one memory storing instructions that, when executed by the at least one processor, cause the apparatus to perform one or more or all steps of a method according to the first aspect.

According to another aspect, an apparatus comprises at least one processor and at least one memory storing instructions that, when executed by the at least one processor, cause the apparatus to perform: receiving, by a reinforcement learning, RL, management function from at least one RL agent, information representative of exploration capabilities of the considered RL agent; configuring by the RL management function, based on first information representative of exploration capabilities received from a first RL agent, the first RL agent with first exploration tasks of a first exploration process to be performed by the first RL agent to contribute to a collaborative RL; receiving, by the RL management function from the first RL agent, first exploration results of the first exploration process; processing by the RL management function the first exploration results and second exploration results of a second exploration process performed by a second RL agent to contribute to the collaborative RL.

The instructions, when executed by the at least one processor, may cause the apparatus to perform one or more or all steps of a method according to the first aspect.

According to another aspect, a computer program comprises instructions that, when executed by an apparatus, cause the apparatus to perform one or more or all steps of a method according to the first aspect.

According to another aspect, a non-transitory computer readable medium comprises program instructions stored thereon for causing an apparatus to perform: receiving, by a reinforcement learning, RL, management function from at least one RL agent, information representative of exploration capabilities of the considered RL agent; configuring by the RL management function, based on first information representative of exploration capabilities received from a first RL agent, the first RL agent with first exploration tasks of a first exploration process to be performed by the first RL agent to contribute to a collaborative RL; receiving, by the RL management function from the first RL agent, first exploration results of the first exploration process; processing by the RL management function the first exploration results and second exploration results of a second exploration process performed by a second RL agent to contribute to the collaborative RL.

The program instructions may cause the apparatus to perform one or more or all steps of a method according to the first aspect.

According to a second aspect, a method for use by a first reinforcement learning, RL, agent, the method may comprise at least one of the following steps: sending, to a RL management function, information representative of exploration capabilities of the first RL agent; receiving configuration information for exploration tasks of an exploration process to be performed by the first RL agent to contribute to a collaborative RL; performing the exploration process based on the configuration information to generate first exploration results; sending, to at least one of the RL management function and a second RL agent, the first exploration results.

The method may comprise: receiving, from the RL management function, a RL strategy that defines an algorithm to determine one or more actions to be taken by the first RL agent in the context of the first exploration process; performing the exploration process using the RL strategy.

The method may comprise: receiving, from the RL management function, at least one reporting rule for exploration results of the exploration process, wherein sending the first exploration results is performed according to the reporting rule.

According to another aspect, an apparatus comprises means for performing: sending, by a RL agent to a RL management function, information representative of exploration capabilities of the first RL agent; receiving, by the RL agent, configuration information for exploration tasks of an exploration process to be performed by the first RL agent to contribute to a collaborative RL; performing, by the RL agent, the exploration process based on the configuration information to generate first exploration results; sending, by the RL agent to at least one of the RL management function and a second RL agent, the first exploration results

The apparatus may comprise means for performing one or more or all steps of the method according to the first aspect. The means may include circuitry configured to perform one or more or all steps of a method according to the first aspect. The means may include at least one processor and at least one memory storing instructions that, when executed by the at least one processor, cause the apparatus to perform one or more or all steps of a method according to the second aspect.

According to another aspect, an apparatus comprises at least one processor and at least one memory storing instructions that, when executed by the at least one processor, cause the apparatus to perform: sending, by a RL agent to a RL management function, information representative of exploration capabilities of the first RL agent; receiving, by the RL agent, configuration information for exploration tasks of an exploration process to be performed by the first RL agent to contribute to a collaborative RL; performing, by the RL agent, the exploration process based on the configuration information to generate first exploration results; sending, by the RL agent to at least one of the RL management function and a second RL agent, the first exploration results.

The instructions, when executed by the at least one processor, may cause the apparatus to perform one or more or all steps of a method according to the second aspect.

According to another aspect, a computer program comprises instructions that, when executed by an apparatus, cause the apparatus to perform one or more or all steps of a method according to the second aspect.

According to another aspect, a non-transitory computer readable medium comprises program instructions stored thereon for causing an apparatus to perform at least the following: sending, by a RL agent to a RL management function, information representative of exploration capabilities of the first RL agent; receiving, by the RL agent, configuration information for exploration tasks of an exploration process to be performed by the first RL agent to contribute to a collaborative RL; performing, by the RL agent, the exploration process based on the configuration information to generate first exploration results; sending, by the RL agent to at least one of the RL management function and a second RL agent, the first exploration results.

The program instructions may cause the apparatus to perform one or more or all steps of a method according to the second aspect.

## BRIEF DESCRIPTION OF THE DRAWINGS

Example embodiments will become more fully understood from the detailed description given herein below and the accompanying drawings, which are given by way of illustration only and thus are not limiting of this disclosure.

FIG. 1A illustrates schematically a RL using a single RL agent according to an example.
FIG. 1B illustrates schematically a RL using multiple RL agents according to an example.
FIG. 2 shows a flowchart of a method using a GEC metric for RL according to one or more example embodiments.
FIG. 3 shows a flow diagram illustrating a method for RL according to one or more example embodiments.
FIG. 4 shows a flow diagram illustrating a method for RL according to one or more example embodiments.
FIG. 5 shows a flow diagram illustrating a method for RL according to one or more example embodiments.
FIG. 6 shows a flowchart of a method for collaborative RL according to one or more example embodiments.
FIG. 7 shows a flowchart of a method for collaborative RL according to one or more example embodiments.
FIG. 8 shows schematically an architecture of a radio telecommunication network according to an example.
FIG. 9 is a block diagram illustrating an exemplary hardware structure of an apparatus according to an example.

It should be noted that these drawings are intended to illustrate various aspects of devices, methods and structures used in example embodiments described herein. The use of similar or identical reference numbers in the various drawings is intended to indicate the presence of a similar or identical element or feature.

DETAILED DESCRIPTION

Detailed example embodiments are disclosed herein. However, specific structural and/or functional details disclosed herein are merely representative for purposes of describing example embodiments and providing a clear understanding of the underlying principles. However these example embodiments may be practiced without these specific details. These example embodiments may be embodied in many alternate forms, with various modifications, and should not be construed as limited to only the embodiments set forth herein. In addition, the figures and descriptions may have been simplified to illustrate elements and / or aspects that are relevant for a clear understanding of the present invention, while eliminating, for purposes of clarity, many other elements that may be well known in the art or not relevant for the understanding of the invention.

Reinforcement learning (RL) is an area of machine learning where a RL agent takes one or more actions in an environment in order to maximize an objective.

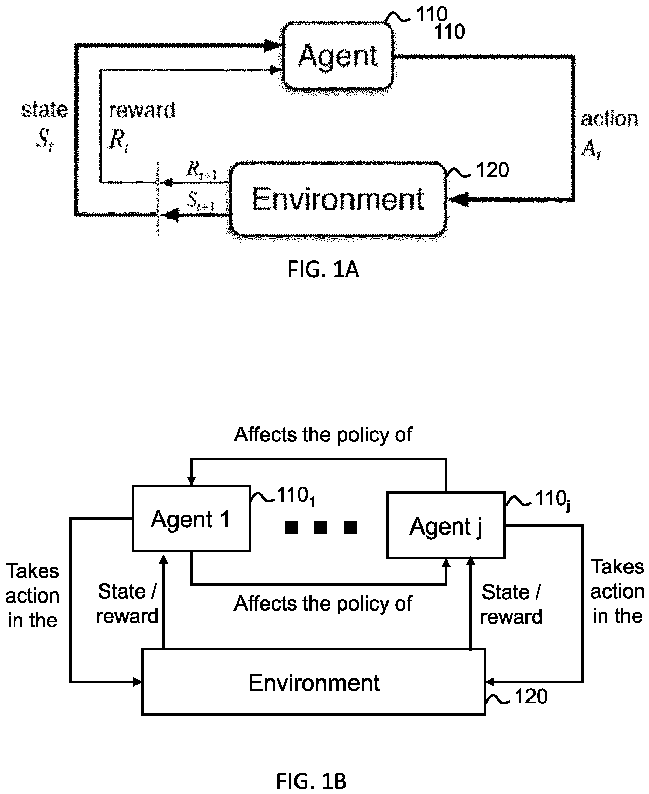

FIG. 1A illustrates schematically a RL using a single RL agent according to an example.

The RL agent 110 has no a *priori* knowledge of the environment 120 and implements an exploration process on a set of possible actions to acquire such knowledge. When a reinforcement learning (RL) agent 110 starts acting in an environment, the RL agent 110 usually does not have any prior knowledge regarding the task which the RL agent needs to tackle. The RL agent 110 must interact with the environment, by taking actions and observing their consequences, and then RL agent 110 can use this data to improve its behavior, as measured by the expected long-term return. This reliance on data that the RL agent gathers by itself differentiates RL agents from those performing either supervised or unsupervised learning,

The exploration process is an iterative process. During an iteration, at a given time t, the RL agent 110 receives state information St from the environment 120. The RL agent then selects an action At to be taken, e.g. based on the state information $S_t$, by applying an exploration strategy. A reward $R_t$ is computed for the selected action $A_t$ based on a reward function.

An exploration process may be based on a Markov Decision Process (MDP) in which key parameters are $\langle S,A,p,R,\gamma \rangle$, where $S$ is a finite set of environment states, $A$ is the finite set of RL agent's actions, $p: S \times A \times S \mapsto [0,1]$ is the policy or state transition function that defines whether a state transition is allowed or not given an input action, $R: S \times A \times S \mapsto \mathcal{R}$ is the reward function that computes a reward for each state transition and an input action, and $\gamma$ is a discount factor that is used to determine the present value of future rewards. If $\gamma = 0$, then the RL agent learns only the actions that produce an immediate reward.

FIG. 1B illustrates schematically a RL using multiple RL agents according to an example.

The setup of multi RL agents is more generic and can be defined as $\langle S,A,p,R,\Gamma \rangle$, where $S = S_1 \times S_2 \times ... \times S_j$ is the set of all states available to the RL agents, $A = A_1 \times A_2 \times ... \times A_j$ is the set of all actions available to the RL agents, $p: S \times A \times S \mapsto [0,1]$, is the transition function, $R = R_1 \times R_2 \times ... \times R_j$ is the set of all rewards by the RL agents, $R_j: S \times A \times S \mapsto \mathcal{R}$, is the reward of RL agent $j$, and $\Gamma = \gamma_1 \times \gamma_2 \times ... \times \gamma_j$ is the set of all discount factors of the RL agents.

In multi-RL agent scenario, each RL agent needs to learn its own policy and make decision collaboratively. In a cooperative environment, each RL agent may observe the states of the environment, detect actions taken by the other RL agents and compute rewards for the taken actions. However, the exploration strategy applied by each RL agent is not fully visible to other RL agents and may impact on the behavior of different RL agents.

A reinforcement learning policy may be defined as a mapping function from an environment observation (or observation-action pair) to a probability distribution of the actions to be taken.

An exploration strategy defines an algorithm to determine one or more actions to be taken by a RL agent using as input one or more parameters reflecting the state of the environment. The exploration strategy may be based on a probabilistic approach. The exploration strategy may use a loss function, Q values, a reward, etc.

Example categories of exploration strategies for the reinforcement learning include:

- Naive exploration (all states and actions have equal probability and no prior knowledge is assumed);
- Epsilon-greedy (the RL agent does random exploration occasionally with probability and takes the optimal action most of the time with probability);
- Optimistic initialization (Initializing the Q-value with prior value or knowledge and generating "optimistic" estimates of state-action values and following a greedy policy with respect to optimistic estimates);
- Boltzmann exploration (the RL agent draws actions from a SoftMax distribution regulated by a temperature parameter);
- Upper confidence bound (the RL agent selects the greediest action to maximize an upper confidence bound based on Q value and inverse of visitation of a (state, action) ;
- Knowledge gradients (the states and actions are sampled/drawn from I distribution and the state and/or action having the highest gradient are selected;

- Thompson sampling (RL agent keeps track of a belief over the probability of optimal actions and chooses the action that maximizes the expected reward with respect to a randomly drawn belief);
- Auto encoder based exploration (where tractable states in hash code are generated from high-dimensional states);
- Noise-based Exploration (noise is added to the observation, action or even parameter space);
- Etc.

So far these above RL exploration approaches are tailored to optimize the RL exploration at a single node level and for a single agent and does not account for the cases where different instances of same RL strategy is running at different nodes and / or with different RL agents.

Embodiments of a method and apparatus for collaborative RL exploration among different RL agents in respective nodes applying individually the same RL algorithm with or without applying the same exploration strategy for a given use case are disclosed. The collaborative RL exploration is performed only for the exploration phase of the RL process. Once this exploration phase is finalized, each contributing node proceeds with the exploitation phase alone.

The orchestration of this collaborative RL exploration among the different nodes is performed by a function, referred to herein as the RL Management Function, RLMF. The RLMF is configured to control the exploration strategy and/or exploration tasks used by one or more RL agents located in respective nodes that contribute to the collaborative RL exploration.

In one or more embodiments, a central node may be used for implementing the RLMF. Depending on the considered case and deployment, this RL management function can be hosted by a network entity such a gNB or another core network entity such as OAM. In alternative embodiments, several nodes may be configured with a RLMF: for example several base stations may be configured with a RLMF and a RL agent and be configured to collaborate to a collaborative RL exploration.

The RLMF may determine one or more exploration parameters for the collaborative RL exploration process. The RLMF may orchestrate the collaborative RL exploration process by configuring the RL agents with exploration parameters (e.g. exploration strategy and/or exploration tasks) enforcing each of the RL agents to act accordingly and to produce exploration results for one or more other RL agents.

Exploration results may typically include vectors, where each vector may include information such that: a current action, a next action taken in the exploration space, a current state of the environment, a next state of the environment after the next action, a reward computed based on the current action and the next action taken, etc. The exploration results may be aggregated over all contributing RL agents and the aggregated exploration be used to determine whether or not a convergence criterion is met and / or how to configure further exploration tasks for one or more or all contributing RL agents.

The objective of this collaborative RL exploration is to benefit from the different nodes with respective RL agents to speed up the exploration phase and reach optima (e. g. a convergence criterion) more quickly.

This collaborative RL exploration implements a collaboration in efficient manner which account for nodes with heterogeneous exploration capabilities.

For example, if the collaborative RL exploration is applied for the same use case on different RL agents (e.g. the use case is link adaptation), the RL management function can benefit from heterogeneous exploration capabilities of the different RL agents: an exploration process executed by a high capacity RL agent can help to speed up and tune an exploration process executed by a low capacity RL agent.

To this end exploration capabilities of the RL agents are collected and analyzed to allow the RLMF to configure the RL agents with appropriate exploration parameters.

Based on the exploration capabilities of the RL agents, the RLMF may select an appropriate RL exploration strategy for each RL agent that participates to the collaborative RL exploration process. The selected RL exploration strategy may be the same for all RL agents contributing to the collaborative RL exploration process but exploration parameters may vary from one RL agent to another agent. For example, the exploration space and / or the number of exploration tasks may be reduced for RL agent(s) with low exploration capabilities whereas the RL agents with higher capabilities can be assigned a larger exploration space and / or a higher number of exploration tasks.

Exploration parameters may include: the selected exploration strategy, parameters of the selected exploration strategy, the exploration space (set of actions to be explored), an exploration convergence criterion, or other exploration parameters.

A metric may be used to represent exploration capabilities of an RL agent and is referred to herein as the Generic Exploration Capabilities (GEC). The metric allows to encode information on exploration capabilities of RL agents on a scale of values. The metric also allows to share information on exploration capabilities between nodes. The metric allows to compare exploration capabilities between nodes and to determine a common exploration strategy to be applied by the contributing RL agents.

Each candidate RL agent may send information representative of its exploration capabilities or its GEC value to the RLMF.

The exploration capabilities of a RL agent in a node may be defined by one or more parameters representative of:

1) processing capabilities (such as computation resource capacity in term or memory or computation power, current load, or other parameters) of the RL agent; these processing capabilities may be representative of processing capabilities that are available specifically for exploration tasks performed by the RL agent or be representative of total processing capabilities of the node; and / or

2) one or more categories of exploration strategies supported by the RL agent, where categories allow to distinguish the complexity of exploration strategies used by an RL agent and allow an RL agent to prepare certain processing resources, such as memory buffer to store results/reports from states, actions, and the time limitation of convergence; a category may for example be defined by a complexity level on a scale of complexity levels; and / or

3) an exploration efficiency of the RL agent; the exploration efficiency rate may be used to quantify the efficiency of the RL exploration strategy supported by the RL agent.

The processing capabilities and categories of exploration strategies (and / or the exploration efficiency) of an RL agent are in general correlated and the correlation are positive. That is if the processing capabilities increase, then that the node can execute more complex exploration strategies and vice versa.

A GEC metric value $GEC_i$ for an RL agent i may be computed based on the following function G:

$$GEC_i = G(g_i, f_i)$$

Where:

- $g_i$ represents the (e.g. gNB) processing capabilities of RL agent $i$; $g_i$ may correspond to a score computed with respect to a scale of values that quantifies the RL agent processing capabilities;
- $f_i$ represents an exploration efficiency rate that the RL agent i is able to implement; $f_i$ may correspond to a score computed with respect to a scale of values that quantifies the RL agent exploration efficiency.

The efficiency rate may be computed as the ratio of difference in the entropy of an RL agent between two consecutive steps and the number of episodes / training epochs completed at the current timestep.

One possible way to compute the GEC metric for a RL agent can be:

$$GEC_i = \alpha g_i + \beta f_i$$

where $\alpha$, $\beta$ are scaling hyperparameters such that $\alpha$, $\beta \geq 1$.

The scores $g_i, f_i$ may be positively correlated. That is, if the processing capability $g_i$ decreases, the exploration capability rate $f_i$ decreases and vice versa.

An exploration efficiency rate $f_i$ may be computed as follows:

$$f_i = \frac{\Delta H_i}{n_i}$$

where for an episodic task:

$n_i$ = *number of episodic tasks that the RL agent i has completed at* time *T* and for a non-episodic task:
$n_i$ = *number of training epochs that RL agent i has completed at time T*

$\Delta H_i$ is the difference in the entropy for an RL agent between time T and time T-1 and may be computed as

$$\Delta H_i = H_i(T) - H_i(T-1)$$

where

$$H_i(t) = \sum_j prob_t(S_j, A_j) \, log\left(prob_t(S_j, A_j)\right)$$

where $H_i(t)$ is the entropy of RL agent i at time t that is computed as the sum of the joint probability of being in a state $S_j$ and taking an action $A_j$. This joint probability can be computed using a count-based approach or an approximator, such as neural network.

Of course other mathematical expressions may be used for coding and computing processing capabilities of RL agent i and/or the exploration efficiency of the RL agent *i*.

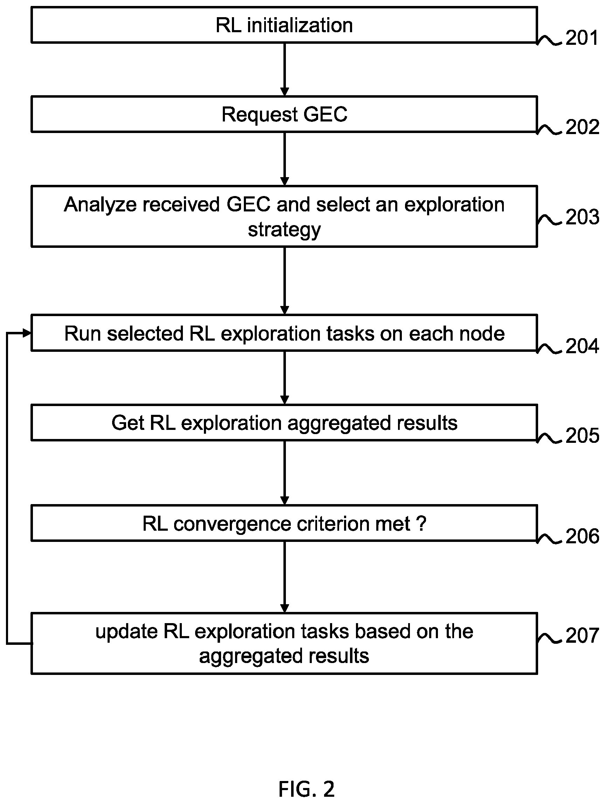

FIG. 2 shows a flowchart of a method using a GEC metric.

In step 201, the RL management function initializes the collaborative RL exploration and informs candidate RL agents that a collaborative RL exploration starts.

In step 202, the RL before running the collaborative RL exploration, a request is sent by the RL management function to each candidate RL agent to share its exploration capabilities. Each candidate RL agent may be required to send a GEC metric value.

In step 203, once the exploration capabilities (e.g. GEC metric values) are received from the candidate RL agents (e.g. gNB, UE), the RL management function can select based on the exploration capabilities the best RL exploration strategy and configure exploration tasks tailored for contributing RL agents based on their respective capacities.

In step 204, the exploration tasks are executed by the contributing RL agents in their respective node.

In step 205, the exploration results of the exploration tasks are collected by the RLMF.

The collaboration between the different nodes continues until RL convergence is reached (one or more convergence criteria are tested in step 206).

In step 207, if the convergence is not reached, new exploration tasks are configured based on the exploration results and step 204 is executed again with the newly configured tasks.

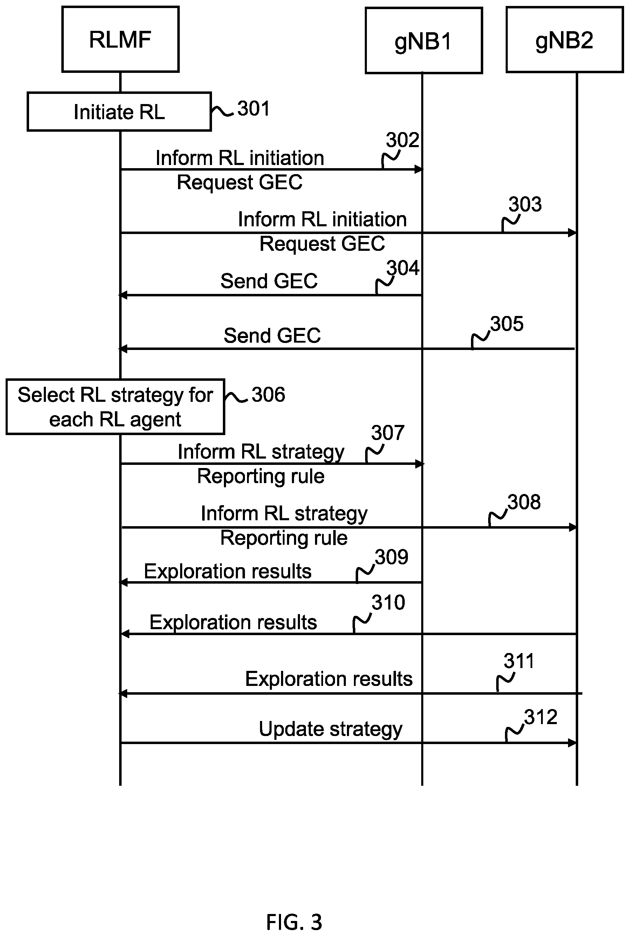

FIG. 3 shows a flow diagram illustrating a method for RL according to one or more example embodiments.

This example concerns a centralized case where the RLMF function is hosted by a "central" node and the RL agents are hosted by other nodes, for example two base stations gNB1 and gNB2. The exchanges between the gNBs may be realized through the existing X2 Interface. This example may be extended to any number of RL agents in respective nodes (UE, base station, etc) distinct from the central node.

This embodiment corresponds to a case where the RL Management function (RLMF) is centralized in a network entity. The RLMF may be hosted by a 5GC entity such as OAM (but not limited to). The RLMF controls RL exploration strategies for several nodes. In this example the nodes are base stations gNB1 and gNB2, but the embodiment is likewise applicable to user equipments. The embodiment can be generalized to any number of nodes controlled by the RLMF.

In step 301, initialization of the RL is first realized at RLMF. This initialization may include an identification of nodes performing the same RL algorithm. The RL algorithm may be Deep Q Network (DQN); PPO (proximity policy optimization); Vanilla Policy Gradient (VPG), Trust Region Policy Optimization (TRPO); Proximal Policy Optimization (PPO); Deep Deterministic Policy Gradient (DDPG); etc.

The RL algorithm defines the behavior of an agent, (optionally of a critic if an Actor-Critic algorithm is used) and a policy that maps action(s) of an agent to state(s). The RL agent may take an action based on any RL exploration strategy. Based on this action, the policy tells the RL agent what the next state is. If the agent has several actions at the current state, which can map to different states, then the RL agent computes the value of each state based on different actions and takes the best one. The critic also plays the same role. In step 302, the RLMF sends a message to the gNB1 to inform the gNB1 that the RLMF initiates and orchestrates an RL exploration phase optimization through a collaborative RL exploration process. The same message or another message may be used for requesting its exploration capabilities.

Likewise, in step 303, the RLMF sends a message to the gNB2 to inform the gNB2 that the RLMF initiates and orchestrates an RL exploration phase optimization though a collaborative RL process. The same message or another message may be used for requesting its exploration capabilities.

In step 304, the gNB1 informs the RLMF if the gNB1 accepts to participate to this collaborative RL exploration process through the sharing of its exploration capabilities. In response to the message of step 302, the RLMF receives a message from the gNB1 including its exploration capabilities when the gNB1 accepts to participate.

In step 305, the gNB2 informs the RLMF if the gNB2 accepts to participate to this collaborative RL exploration process through the sharing of its exploration capabilities. In response to the message of step 303, the RLMF receives a message from the gNB2 including its exploration capabilities when the gNB2 accepts to participate.

In steps 304 and 305, the concerned node may refuse to participate to this collaborative RL exploration process and may send a NACK instead of a message containing the exploration capabilities (e.g. the value of GEC metric).

In steps 304 and 305, the concerned node may accept to participate to this collaborative RL exploration process and may send a message containing the exploration capabilities (e.g. the value of GEC metric).

If the RLMF does not receive exploration capabilities from a given node, then it means that the RL agent in this node is not willing to collaborate and should be discarded from the set of collaborating RL agents.

In steps 305 and 304, the exploration capabilities may be coded by a global metric, GEC, as disclosed herein, or using one or more parameters representative of exploration capabilities.

In step 306, based on the exploration capabilities received for the RL agents having accepted to participate to the collaborative RL exploration process, the RLMF select an appropriate RL exploration strategy (and / or parameters of the exploration strategy) for each RL agent having accepted to participate to the collaborative RL exploration process. The RL algorithm may be the same for all RL agents but the exploration parameters, especially the exploration strategy, may vary from one RL agent to another agent. For example, the exploration space may be reduced for RL agent(s) with low GEC whereas the RL agents with higher capabilities can be assigned a larger exploration space and / or a higher number of exploration tasks. For example, different RL agents having the same RL algorithm (e.g. DQN) may use different RL exploration strategy. A first RL agent may use naïve exploration, another RL agent may use epsilon-greedy exploration where epsilon = 0.1; another RL agent may use epsilon-greedy exploration with epsilon = 0.9.

As an example, each of the base stations gNB1 and gNB2 sends to RLMF information on its exploration capabilities: the information may include an exploration strategy identification GEC1 or GEC2, respectively. The RLMF may compute a metric value G1 (or respectively G2) of a GEC metric for each of gNB1 and gNB2 based on the received capability information GEC1 (or respectively GEC2), according to any embodiment disclosed herein. The RLMF may compare these values G1, G2 and selects the best exploration strategy based on max{G1, G2}. In an embodiment, the base stations do not share their exploration capabilities but directly the value of GEC metric for comparison of the exploration strategies.

In step 307, the RLMF configures the RL agent of the gNB1 with exploration tasks of an exploration process to be performed by the gNB1. The RLMF may for example send exploration parameters including: the selected exploration strategy, parameters of the selected exploration strategy, the selected exploration policy, parameters of the selected exploration policy, the exploration space (set of actions to be explored), an exploration convergence criterion, or other exploration parameters.

In step 307, the RLMF may further configure the RL agent of the gNB1 with at least one reporting rule for the exploration results generated by the exploration process to be performed by this RL agent.

Likewise, in step 308, the RLMF configures the RL agent of the gNB2 with exploration tasks of an exploration process to be performed by the gNB2.

In step 308, the RLMF may further configure the RL agent of the gNB2 with at least one reporting rule for the exploration results generated by the exploration process to be performed by this RL agent.

It is to be noted that in steps 307 and 308, each RL agent may be configured with a dedicated set of exploration tasks such that the RL agents will explore distinct set of actions in order to improve the collaborative exploration process, e.g. to increase the convergence speed and/or reduce the time to achieve a convergence criterion.

A reporting rule may for example include a timer value at the expiration of which the concerned RL agent should share its exploration results.

In step 309, the RL agent in the base station gNB1 sends to the RLMF its exploration results.

In step 310, the RL agent in the base station gNB2 sends to the RLMF its exploration results.

Steps 307 to 310 may be repeated as necessary.

Based on received exploration results, the RLMF may decide to update the exploration tasks configured for one or more RL agents (e.g. configure new exploration tasks) or interrupt the collaborative RL exploration process for one or more or all the RL agents.

In an example, RLMF may decide to reduce the number of exploration tasks to be performed by the RL agent in the gNB1 having less exploration capabilities and configure the RL agent in the gNB2 with more advanced exploration capabilities with additional exploration tasks.

In step 311, the RL agent in the base station gNB2 may send to the RLMF further exploration results for one or more exploration tasks, for example for additional exploration tasks configured for the RL agent in the gNB2.

In step 312, the RLMF may decide to update the exploration tasks configured for the RL agent in the gNB2 to continue the exploration process with this RL agent.

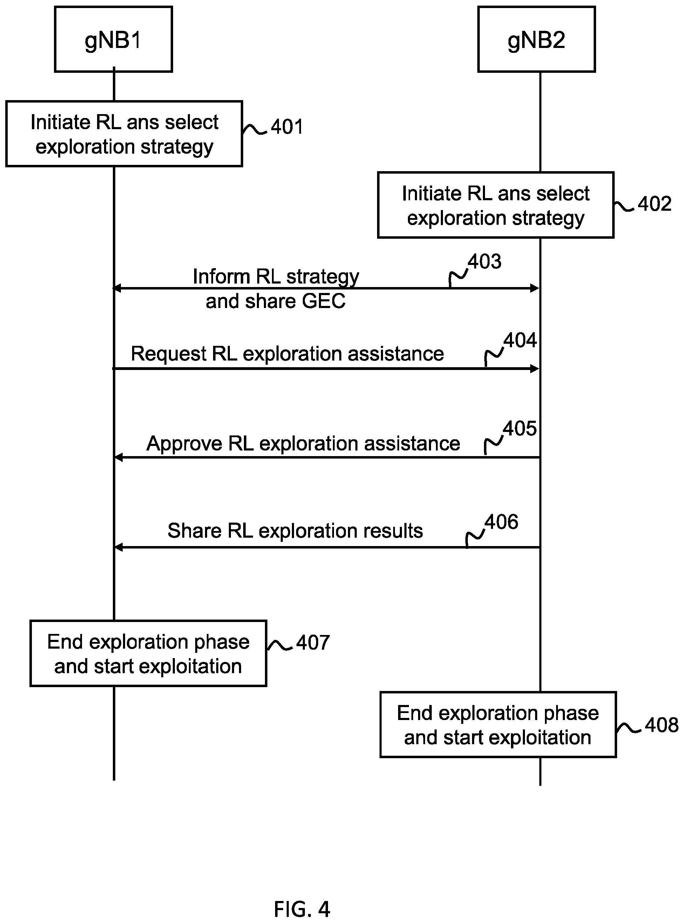

FIG. 4 shows a flow diagram illustrating a method for RL according to one or more example embodiments.

This example concerns a distributed case where a RLMF function and a RL agent is hosted by a first node and a second node respectively, here by base stations gNB1 and gNB2. This example may be extended to any number of nodes (whether UE, base station, or other type of nodes).

The RLMF may be hosted by a ML management Service container (embedded in the gNB). The exchanges between the gNBs may be realized through the existing X2 Interface.

A first RLMF in the first node may receive, from the second RL agent in the second node, information representative of exploration capabilities of the second RL agent. Based on the second information, the first RLMF may send request to the second RLMF for assistance in the collaborative RL and first RLMF may receive exploration results generated by the second RL agent from the second node.

In step 401, the RLMF in the base station gNB1 initiates RL and selects an exploration strategy. The exploration strategy may be selected based on the base station capabilities, for example according to its GEC G1.

Likewise in step 402, the RLMF in the base station gNB2 initiates RL and selects an exploration strategy. The exploration strategy may be selected based on the base station capabilities, for example according to its GEC G2.

In step 403, the RLMF in the base stations gNB1 and gNB2 exchange information with neighboring cells: the exchanged information may include the GEC metric values and/or other type of information representative of exploration capabilities.

In an embodiment, in steps 402 and 403 the base stations may not share information on their exploration capabilities, but instead only the score of GEC value directly for global comparison of their exploration capabilities. The GEC value provides a weighted combination of efficiency rate of the exploration strategy applied by the RL agent and a processing capability. The recipient node may therefore determine, without even knowing the used exploration strategy, if the sending node has more or less capability than the recipient node. For example, if both RLMF in gNB1 (having GEC G1) and gNB2 (having GEC G2) are using epsilon greedy exploration strategy with epsilon = 0.9, and G1 > G2, this means that gNB1 has more capability then gNB2. Even if both RLMF in gNB1 (having GEC G1) and gNB2 (having GEC G2) are using a different exploration strategy and G1 > G2, this also means that gNB1 has more capability then gNB2.

In step 404, the RLMF in the base station gNB1 may, on the basis of the GEC G2 received from the base station gNB2, send a request for assistance to the base station gNB2. This may be done for example if the exploration strategies of the base stations gNB1 and gNB2 are the same and / or if the the GEC G2 received from the base station gNB2 indicates that the base station gNB2 has enough capabilities to assist the base station gNB1 for its exploration process.

For example, in steps 404, the RLMF in the base station gNB1 with low capacity may request the RL agent in the base station gNB2 with higher low capacity for RL exploration assistance.

In step 405, the RL agent in the base station gNB2 sends a response to the request for assistance: the base station gNB2 may accept or refuse to provide assistance, e.g. on the basis constraints, policies and / or processing load.

In step 406, if the base station gNB2 has accepted to provide assistance, the base station gNB2 sends to the base station gNB1 first exploration results generated by the RL agent in the base station gNB2. Step 406 or steps 404 to 406 may be repeated as necessary.

In step 407, the RLMF in the base station gNB1 may aggregate the first exploration results received from the base station gNB2 to aggregate them with its own exploration results to generate aggregated exploration results. The RLMF in the base station gNB1 may decide, based on the aggregated exploration results, whether to continue with the exploration or whether an exploration convergence criterion is met. If the RL exploration phase ends, the base station gNB1 may proceed with RL exploitation phase.

In step 408, the RLMF in the base station gNB2 may decide, based on it own exploration results, whether to continue with the exploration or whether an exploration convergence criterion is met.

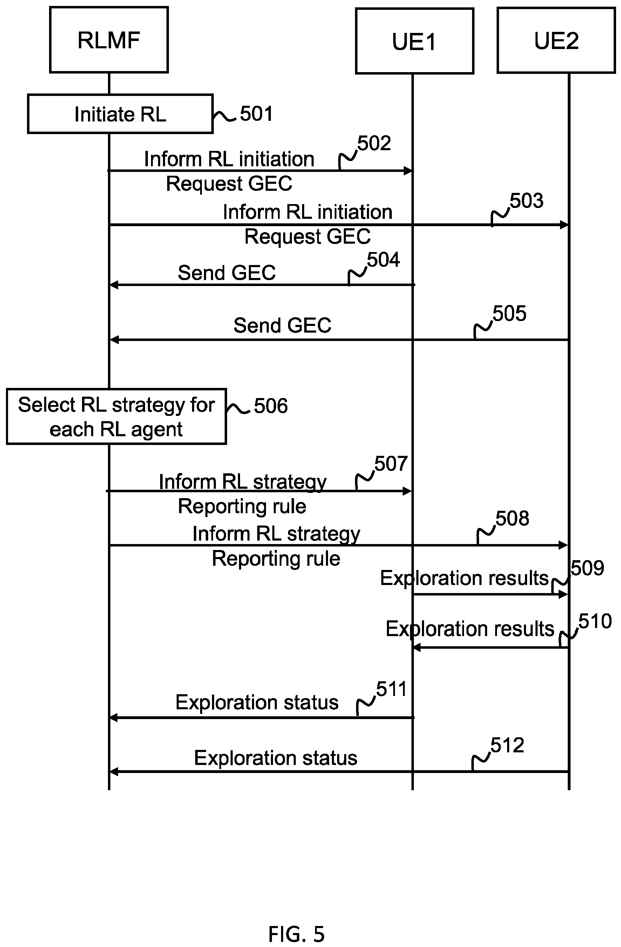

FIG. 5 shows a flow diagram illustrating a method for RL according to one or more example embodiments.

Here two RL agents are running at UE side, in nodes UE1, UE2. The RLMF may be located in a base station (or a UE, a PRU (Positioning Reference Unit), etc). In this example, exploration results may be shared between UEs through one or more sidelinks.

In step 501, the RLMF initiates RL.

In step 502, the RLMF inform the first RL agent in node UE1 that the RLMF initiates and orchestrates an RL exploration phase optimization though a collaborative RL exploration process. The same message or another message may be used for requesting the exploration capabilities of the first RL agent.

In step 503, the RLMF inform the second RL agent in node UE2 that the RLMF initiates and orchestrates an RL exploration phase optimization though a collaborative RL exploration process. The same message or another message may be used for requesting the exploration capabilities of the second RL agent.

In step 504, the first RL agent in node UE1 ends to RLMF information on its exploration capabilities, for example a GEC value G1.

In step 505, the second RL agent in node UE2 sends to RLMF information on its exploration capabilities, for example a GEC value G2.

In step 506, based on the information representative of exploration capabilities received from the RL agents, the RLMF selects an appropriate RL exploration strategy (and / or parameters of the exploration strategy) for each RL agent having accepted to participate to the collaborative RL exploration process. Like in step 306, the RL algorithm may be the same for all RL agents but the exploration parameters, especially the exploration strategy, may vary from one RL agent to another agent. For example, the exploration space may be reduced for RL agent(s) with low GEC whereas the RL agents with higher capabilities can be assigned a larger exploration space.

As an example, each of the UEs UE1 and UE2 sends to RLMF information on its exploration capabilities: the information may include an exploration strategy identification GEC1 or GEC2, respectively. The RLMF may compute a metric value G1 (or respectively G2) of a GEC metric for each of gNB1 and gNB2 based on the received capability information GEC1 (or respectively GEC2), according to any embodiment disclosed herein. The RLMF may compare these values G1, G2 and selects the best exploration strategy based on max{G1, G2}. In an embodiment, the base stations do not share their exploration capabilities but directly the value of GEC metric for comparison of the exploration strategies.

In step 507, the RLMF configures the RL agent of UE1 with exploration tasks of an exploration process to be performed by the UE1. The RLMF may for example send exploration parameters including: the selected exploration strategy, parameters of the selected exploration strategy, the exploration space (set of actions to be explored), an exploration convergence criterion, or other exploration parameters.

In step 507, the RLMF may further configure the RL agent of the UE1 with at least one reporting rule for the exploration results generated by the exploration process to be performed by this RL agent.

In step 508, as in step 507 but for UE2, the RLMF configures the RL agent of UE2 with exploration tasks of an exploration process to be performed by the UE2The the RLMF may further configure the RL agent of the UE2 with at least one reporting rule for the exploration results generated by the exploration process to be performed by this RL agent.

In step 509, the RL agent of UE1 sends to the RL agent of UE2 (through a sidelink) first exploration results. The RL agent of UE2 may aggregate the first exploration results received from UE1 to aggregate them with its own exploration results (i.e. the second results sent to UE1 in step 510) to generate aggregated exploration results. The RL agent of UE1 may decide, based on the aggregated exploration results, whether to continue with the exploration or whether an exploration convergence criterion is met. If the RL exploration phase ends, the RL agent of UE1 may proceed with RL exploitation phase.

Likewise, in step 510, the RL agent of UE2 sends to the RL agent of UE1 (through a sidelink) second exploration results. The RL agent of UE1 may aggregate the second exploration results received from UE2 to aggregate them with its own exploration results (i.e. the first results sent to UE2) to generate aggregated exploration results. The RL agent of UE1 may decide, based on the aggregated exploration results, whether to continue with the exploration or whether an exploration convergence criterion is met. If the RL exploration phase ends, the RL agent of UE1 may proceed with RL exploitation phase.

In step 511, the RL agent of UE1 may send to The RLMF the aggregated results generated on step 509. In addition or in alternative, the RL agent of UE1 may send to the RLMF an exploration status indicating whether or not a convergence criterion is met or not, i.e. whether the RL agent of UE1 has decided to stop the RL exploration phase and proceed with RL exploitation phase.

Likewise in step 512, the RL agent of UE2 may send to The RLMF the aggregated results generated on step 509. In addition or in alternative, the RL agent of UE2 may send to the RLMF an exploration status indicating whether or not a convergence criterion is met or not, i.e. whether the RL agent of UE2 has decided to stop the RL exploration phase and proceed with RL exploitation phase.

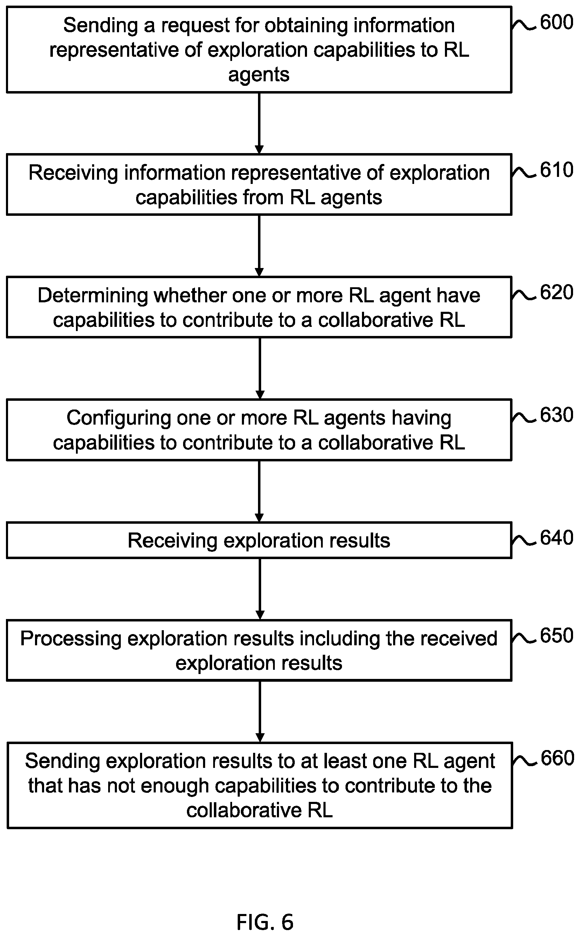

FIG. 6 shows a flowchart of a method for collaborative RL according to one or more example embodiments.

The steps of the method may be implemented by a RL management function in a node according to any example described herein.

In step 600, the RLMF may send, to one or more RL agent, a request for obtaining information representative of exploration capabilities of the concerned RL agent.

In step 610, the RLMF may receive, from the one or more RL agents, information representative of exploration capabilities of each RL agent.

In step 620, the RLMF may determine, based on the information representative of exploration capabilities received from the RL agents whether one or more RL agent have capabilities to contribute to a collaborative RL.

The RLMF may make a first determination, based on first information representative of exploration capabilities received from a first RL agent, that the first RL agent has capabilities to contribute to a collaborative RL. The RLMF may compute a GEC metric based on the first information representative of exploration capabilities to make the first determination.

In step 630, the RLMF may configure one or more RL agents having capabilities to contribute to a collaborative RL.

In this step, the RLMF may configure, based on the first determination and the first information representative of exploration capabilities received from a first RL agent, the first RL agent with first exploration tasks of a first exploration process to be performed by the first RL agent to contribute to the collaborative RL. The RLMF may configure the first RL agent with at least one reporting rule for exploration results of the first exploration process performed by the first RL agent.

In this step, the RLMF may select, based on the received information representative of exploration capabilities, a RL strategy that defines an algorithm to determine one or more actions to be taken by an RL agent in the context of an exploration process and the RLMF may configure the first RL agent with the selected RL strategy.

In step 640, the RLMF receives, from the first RL agent, first exploration results of the first exploration process.

In step 650, the RLMF processes the first exploration results and second exploration results of a second exploration process performed by a second RL agent to contribute to the collaborative RL.

When the second exploration process is executed by the second RL agent in the first node, the second exploration process is executed, by the second RL agent in the first node, to generate the second exploration results.

When the second exploration process is executed by the second RL agent in a second node distinct from the first node, the RLMF receives the second exploration results from the second RL agent.

Processing the first exploration results and second exploration results may include aggregating the first exploration results and the second exploration results to generate aggregated exploration results.

Processing the first exploration results and second exploration results may be performed to determine and configure further exploration tasks for the first RL agent.

Processing the first exploration results and second exploration results may include determining whether a convergence criterion is met for the collaborative RL. The convergence criterion may be evaluated based on the aggregated exploration results.

The first agent may be configured by the RLMF based on a determination with further exploration tasks that the convergence criterion is not met for the collaborative RL. If the convergence criterion is met for the collaborative RL, then the RLMF may decide to put an end to the exploration phase.

In step 660, the RLMF may make a second determination, based on a second information representative of exploration capabilities received from a third RL agent, that the third RL agent has not enough capabilities to contribute to the collaborative RL. Based on the second determination, the RLMF may send exploration results to the third RL agent, for example the first and / or second and / or aggregated exploration results.

The method described by reference to FIG. 6 may be generalized to any number of RL agents that may be located in respective distinct nodes. The RLMF may then

select, based on the information representative of exploration capabilities received from the RL agents, RL agents having capabilities to contribute to the collaborative RL.

For example, the selected RL agents include not only the first RL agent but also the second RL agent. The RLMF may then configure, based on the information representative of exploration capabilities received from the second RL agent, the second agent with second exploration tasks of the second exploration process to be performed by the second RL agent. The RLMF may receive the second exploration results from the second RL agent and aggregating exploration results of exploration processes performed by the selected RL agents to generate aggregated exploration results, the aggregated exploration results including the first exploration results and the second exploration results from the second agent.

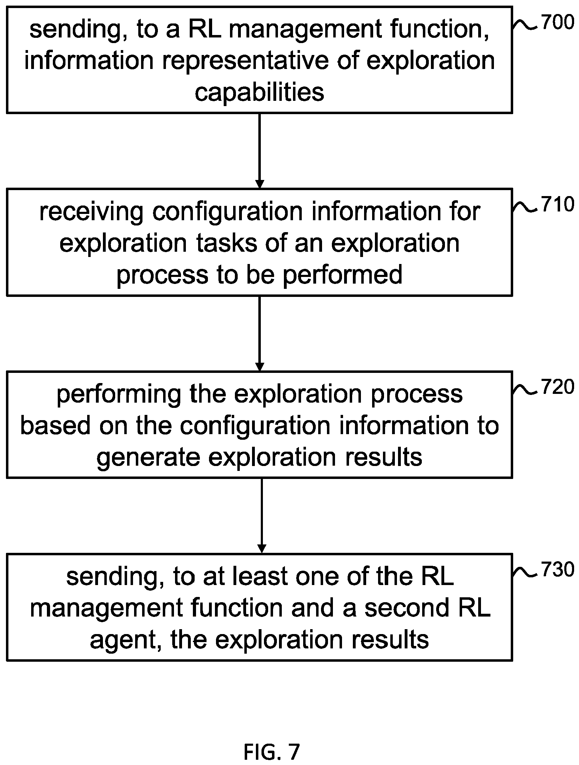

FIG. 7 shows a flowchart of a method for collaborative RL according to one or more example embodiments.

The steps of the method may be implemented by a RL agent in a node according to any example described herein.

In step 700, the RL agent may send, to a RL management function, information representative of exploration capabilities of the first RL agent.

In step 710, the RL agent may receive configuration information for exploration tasks of an exploration process to be performed by the first RL agent to contribute to a collaborative RL.

The RL agent may for example receive, from the RL management function, a RL strategy that defines an algorithm to determine one or more actions to be taken by the first RL agent in the context of the first exploration process and may perform the exploration process using the RL strategy.

The RL agent may also receive, from the RL management function, at least one reporting rule for exploration results of the exploration process, wherein sending the first exploration results in step 730 is performed according to the reporting rule.

In step 720, the RL agent may perform the exploration process based on the configuration information to generate exploration results.

In step 730, the RL agent may send, to at least one of the RL management function and a second RL agent, the exploration results.

In embodiments, the first RL agent is implemented by a first node and the second RL agent is implemented by a second node distinct from the first node, the second RL agent may send a request to the first agent for assistance in the collaborative RL.

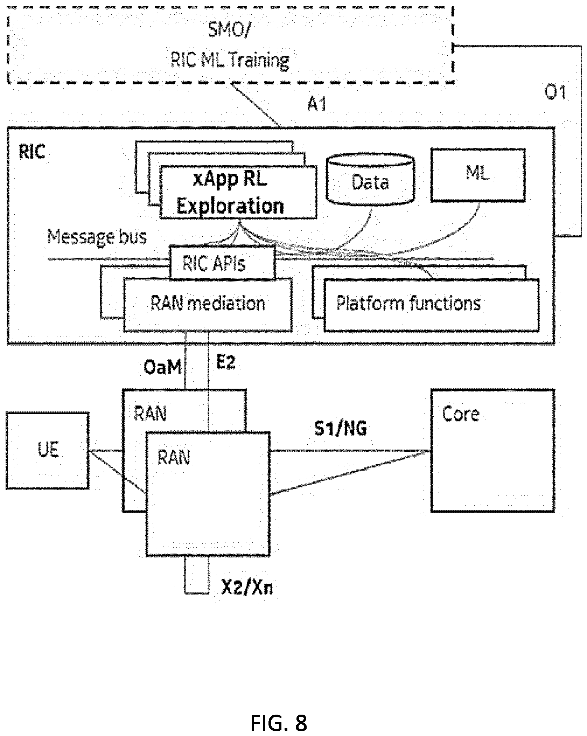

FIG. 8 shows schematically an architecture of network entities in a 5G core network, using O-RAN / RIC framework defined in current 3GPP standards.

In such framework, existing interfaces and capabilities of the O-RAN/RIC may be used in order to implement one or more RL agents and/or the RLMF as a new application (xApp). In this case, the RLMF is located at the RIC as part of a new RL exploration application. The exchanges between the RL agents and the RLMF may be implemented through the interface E2.

The methods, examples and embodiments disclosed herein may be implemented for radio telecommunication networks, including a fifth generation (5G) or 6G or beyond network. Prior or subsequent generations of radio telecommunication networks may be take benefit from by the collaborative reinforcement learning as disclosed herein.

A node is a node of the radio telecommunication network. A node may refer to any entity (e.g. network entity or user equipment) of the radio telecommunication network.

A node of the radio telecommunication network may be:

- an end point (e.g. a user equipment, a printer, a radio receiver, a radio transmitter, etc) for data transmissions or redistribution ;
- an intermediate point (e.g. a gateway, a router, a switch, etc) for data transmissions or redistribution, e.g. in a code network or an access network;
- any network entity, e.g. in the core network, that is configured to perform various functions on a control plane and / or user plane.

A network entity may for example be a base station (eNB, gNB, gNB-DU, gNB-CU, etc), a server, a network controller, a gateway, a router, a switch, a hub, a modem, a printer, an access node, etc. A network entity may include or be operably coupled to a transceiver and may perform various network-related functions (access control, security functions, supervising, operating, controlling, configuring, analysis, data analytics generation, etc) in the radio telecommunication network.

A user equipment, UE, (or user terminal, user device) may refer to a computing device that includes wireless mobile communication devices operating with or without a subscriber identification module (SIM), including, but not limited to, the following types of devices: a mobile station (MS), a mobile phone, a radio cell phone, a smartphone, a personal digital assistant (PDA), a handset, a device using a wireless modem (alarm or measurement device, etc.), a laptop and/or touch screen computer, a tablet, a phablet, a game console, a notebook, and a multimedia device, as examples.

The methods, examples and embodiments disclosed herein are applicable to several use cases in which AI/ML with reinforcement learning is applicable, such as:

- CSI feedback enhancement, e.g., overhead reduction, improved accuracy, prediction;
- Beam management, e.g., beam prediction in time, and/or spatial domain for overhead and latency reduction, beam selection accuracy improvement;
- Positioning accuracy enhancements for different scenarios including, e.g., those with heavy NLOS (Non Line of Sight) conditions;
- Determination of the KPIs and corresponding requirements for the AI/ML based algorithms;
- Performance, inference latency and computational complexity of AI/ML based algorithms;
- Overhead, power consumption (including computational), memory storage, and hardware requirements (including for given processing delays);
- Etc.

It should be appreciated by those skilled in the art that any functions, engines, block diagrams, flow diagrams, state transition diagrams, flowchart and / or data structures described herein represent conceptual views of illustrative circuitry embodying the principles of the invention. Similarly, it will be appreciated that any flow charts, flow diagrams, state transition diagrams, pseudo code, and the like represent various processes.

Although a flow chart may describe operations as a sequential process, many of the operations may be performed in parallel, concurrently or simultaneously. Also some operations may be omitted, combined or performed in different order. A process may be terminated when its operations are completed but may also have additional steps not disclosed in the figure or description. A process may correspond to a method, function, procedure, subroutine, subprogram, etc. When a process corresponds to a function, its termination may correspond to a return of the function to the calling function or the main function.

Each described function, engine, block, step described herein can be implemented in hardware, software, firmware, middleware, microcode, or any suitable combination thereof.

When implemented in software, firmware, middleware or microcode, instructions to perform the necessary tasks may be stored in a computer readable medium that may be or not included in a host device or host system. The instructions may be transmitted over the computer-readable medium and be loaded onto the host device or host system. The instructions are configured to cause the host device or host system to perform one or more functions disclosed herein. For example, as mentioned above, according to one or more examples, at least one memory may include or store instructions, the at least one memory and the instructions may be configured to, with at least one processor, cause the host device or host system to perform the one or more functions. Additionally, the processor, memory and instructions, serve as means for providing or causing performance by the host device or host system of one or more functions disclosed herein.

The host device or host system may be a general-purpose computer and / or computing system, a special purpose computer and / or computing system, a programmable processing apparatus and / or system, a machine, etc. The host device or host system may be or include or be part of: a user equipment, client device, mobile phone, laptop, computer, network element, data server, network resource controller, network apparatus, router, gateway, network node, computer, cloud-based server, web server, application server, proxy server, etc.

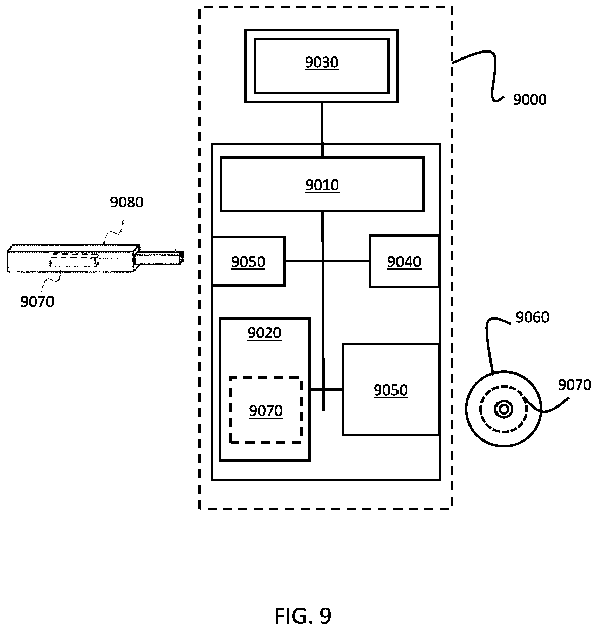

FIG. 9 illustrates an example embodiment of an apparatus 9000. The apparatus 9000 may be a node or be part of a node as disclosed herein. The apparatus 9000 may be used for performing one or more or all steps of a method disclosed herein.

As represented schematically by FIG. 9, the apparatus 9000 may include at least one processor 9010 and at least one memory 9020. The apparatus 9000 may include one or more communication interfaces 9040 (e.g. network interfaces for access to a wired / wireless network, including Ethernet interface, WIFI interface, etc) connected to the processor and configured to communicate via wired / non wired communication link(s). The apparatus 9000 may include user interfaces 9030 (e.g. keyboard, mouse, display screen, etc) connected with the processor. The apparatus 9000 may further include one or more media drives 9050 for reading a computer-readable storage medium (e.g. digital storage disc 9060 (CD-ROM, DVD, Blue Ray, etc), USB key 9080, etc). The processor 9010 is connected to each of the other components 9020, 9030, 9040, 9050 in order to control operation thereof.

The memory 9020 may include a random access memory (RAM), cache memory, non-volatile memory, backup memory (e.g., programmable or flash memories), read-only memory (ROM), a hard disk drive (HDD), a solid state drive (SSD) or any combination thereof. The ROM of the memory 9020 may be configured to store, amongst other things, an operating system of the apparatus 9000 and / or one or more computer program code of one or more software applications. The RAM of the memory 9020 may be used by the processor 9010 for the temporary storage of data.

The processor 9010 may be configured to store, read, load, execute and/or otherwise process instructions 9070 stored in a computer-readable storage medium 9060, 9080 and / or in the memory 9020 such that, when the instructions are executed by the processor, causes the apparatus 9000 to perform one or more or all steps of a method described herein for the concerned apparatus 9000.

The instructions may correspond to program instructions or computer program code. The instructions may include one or more code segments. A code segment may represent a procedure, function, subprogram, program, routine, subroutine, module, software package, class, or any combination of instructions, data structures or program statements. A code segment may be coupled to another code segment or a hardware circuit by passing and/or receiving information, data, arguments, parameters or memory contents. Information, arguments, parameters, data, etc. may be passed, forwarded, or transmitted via any suitable technique including memory sharing, message passing, token passing, network transmission, etc.

When provided by a processor, the functions may be provided by a single dedicated processor, by a single shared processor, or by a plurality of individual processors, some of which may be shared. The term "processor" should not be construed to refer exclusively to hardware capable of executing software and may implicitly include one or more processing circuits, whether programmable or not. A processor or likewise a processing circuit may correspond to a digital signal processor (DSP), a network processor, an application specific integrated circuit (ASIC), a field programmable gate array (FPGA), a System-on-Chips (SoC), a Central Processing Unit (CPU), an arithmetic logic unit (ALU), a programmable logic unit (PLU), a processing core, a programmable logic, a microprocessor, a controller, a microcontroller, a microcomputer, a quantum processor, any device capable of responding to and/or executing instructions in a defined manner and/or according to a defined logic. Other hardware, conventional or custom, may also be included. A processor or processing circuit may be configured to execute instructions adapted for causing the host device or host system to perform one or more functions disclosed herein for the host device or host system.

A computer readable medium or computer readable storage medium may be any tangible storage medium suitable for storing instructions readable by a computer or a processor. A computer readable medium may be more generally any storage medium capable of storing and/or containing and/or carrying instructions and/or data. The computer readable medium may be a non-transitory computer readable medium. The term "non-transitory", as used herein, is a limitation of the medium itself (i.e., tangible, not a signal) as opposed to a limitation on data storage persistency (e.g., RAM vs. ROM).

A computer-readable medium may be a portable or fixed storage medium. A computer readable medium may include one or more storage device like a permanent mass storage device, magnetic storage medium, optical storage medium, digital storage disc (CD-ROM, DVD, Blue Ray, etc), USB key or dongle or peripheral, a memory suitable for storing instructions readable by a computer or a processor.

A memory suitable for storing instructions readable by a computer or a processor may be for example: read only memory (ROM), a permanent mass storage device such as a disk drive, a hard disk drive (HDD), a solid state drive (SSD), a memory card, a core memory, a flash memory, or any combination thereof.

In the present description, the wording "means configured to perform one or more functions" or "means for performing one or more functions" may correspond to one or more functional blocks comprising circuitry that is adapted for performing or configured to perform the concerned function(s). The block may perform itself this function or may cooperate and / or communicate with other one or more blocks to perform this function. The "means" may correspond to or be implemented as "one or more modules", "one or more devices", "one or more units", etc. The means may include at least one processor and at least one memory including computer program code, wherein the at least one memory and the computer program code are configured to, with the at least one processor, cause an apparatus or system to perform the concerned function(s).

As used in this application, the term "circuitry" may refer to one or more or all of the following:

(a) hardware-only circuit implementations (such as implementations in only analog and/or digital circuitry) and
(b) combinations of hardware circuits and software, such as (as applicable) : (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions); and
(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, an integrated circuit for a network element or network node or any other computing device or network device.

The term circuitry may cover digital signal processor (DSP) hardware, network processor, application specific integrated circuit (ASIC), field programmable gate array (FPGA), etc. The circuitry may be or include, for example, hardware, programmable logic, a programmable processor that executes software or firmware, and/or any combination thereof (e.g. a processor, control unit/entity, controller) to execute instructions or software and control transmission and receptions of signals, and a memory to store data and/or instructions.

The circuitry may also make decisions or determinations, generate frames, packets or messages for transmission, decode received frames or messages for further processing, and other tasks or functions described herein. The circuitry may control transmission of signals or messages over a radio network, and may control the reception of signals or messages, etc., via one or more communication networks.

Although the terms first, second, etc. may be used herein to describe various elements, these elements should not be limited by these terms. These terms are only used to distinguish one element from another. For example, a first element could be termed a second element, and similarly, a second element could be termed a first element, without departing from the scope of this disclosure. As used herein, the term "and/or," includes any and all combinations of one or more of the associated listed items.

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

While aspects of the present disclosure have been particularly shown and described with reference to the embodiments above, it will be understood by those skilled in the art that various additional embodiments may be contemplated by the modification of the disclosed machines, systems and methods without departing from the scope of what is disclosed. Such embodiments should be understood to fall within the scope of the present disclosure as determined based upon the claims and any equivalents thereof.

LIST OF MAIN ABBREVIATIONS

| | |
|---|---|
| AI | Artificial Intelligence |
| BS | Base Station |
| gNB | gNodeB (NR base station) |
| LTE | Long Term Evolution |

MF         Management Function
ML         Machine Learning
O-RAN     Open Radio Access Network
RIC        RAN Intelligent Controller
RL         Reinforcement Learning
RLMF      Reinforcement Learning Management Function
UE         User Equipment

**Claims**

1. A method for use by a reinforcement learning, RL, management function in a first node, the method comprising:

   receiving, from at least one RL agent, information representative of exploration capabilities of the considered RL agent;
   configuring, based on first information representative of exploration capabilities received from a first RL agent, the first RL agent with first exploration tasks of a first exploration process to be performed by the first RL agent to contribute to a collaborative RL;
   receiving, from the first RL agent, first exploration results of the first exploration process;
   processing the first exploration results and second exploration results of a second exploration process performed by a second RL agent to contribute to the collaborative RL.

2. The method of claim 1, comprising:
   wherein the first RL agent is configured with the first exploration tasks in response to a determination, based on the first information representative of exploration capabilities received from the first RL agent, that the first RL agent has capabilities to contribute to the collaborative RL.

3. The method of claim 1, comprising:

   selecting, based on the received information representative of exploration capabilities, a RL strategy that defines an algorithm to determine one or more actions to be taken by an RL agent in the context of an exploration process.
   configuring the first RL agent with the selected RL strategy.

4. The method of claim 1, wherein the second exploration process is executed by the second RL agent in the first node, the method comprising
   executing, by the second RL agent in the first node, the second exploration process to generate the second exploration results.

5. The method of claim 1, wherein the second exploration process is executed by the second RL agent in a second node distinct from the first node, wherein the method comprises
   receiving the second exploration results from the second RL agent.

6. The method of claim 1, wherein:
   processing the first exploration results and second exploration results is performed to configure further exploration tasks for the first RL agent.

7. The method of claim 1, wherein:

   processing the first exploration results and second exploration results includes determining whether a convergence criterion is met for the collaborative RL;.
   wherein the method comprises configuring the first agent with further exploration tasks based on a determination that the convergence criterion is not met for the collaborative RL.

8. The method of claim 1, wherein:

   processing the first exploration results and second exploration results includes aggregating the first exploration results and the second exploration results to generate aggregated exploration results;
   determining whether a convergence criterion is met for the collaborative RL based on the aggregated exploration results.

9. The method of claim 5, comprising:
sending the first, second or aggregated exploration results to the third RL agent in response to a determination, based on second information representative of exploration capabilities received from a third RL agent, that the third RL agent has not enough capabilities to contribute to the collaborative RL.

10. The method of claim 1, comprising:
configuring the first RL agent with at least one reporting rule for exploration results of the first exploration process performed by the first RL agent.

11. The method of claim 1, wherein the at least one RL agent includes a plurality of RL agents in respective distinct nodes, the method comprising:

selecting, based on the information representative of exploration capabilities received from the plurality of network RL agents, RL agents having capabilities to contribute to the collaborative RL, the selected RL agents including the first RL agent and the second RL agent;
configuring, based on the information representative of exploration capabilities received from the second RL agent, the second agent with second exploration tasks of the second exploration process to be performed by the second RL agent;
receiving the second exploration results from the second RL agent;
aggregating exploration results of exploration processes performed by the selected RL agents to generate aggregated exploration results, the aggregated exploration results including the first exploration results and the second exploration results.

12. A method for use by a first reinforcement learning, RL, agent, the method comprising:

sending, to a RL management function, information representative of exploration capabilities of the first RL agent;
receiving configuration information for exploration tasks of an exploration process to be performed by the first RL agent to contribute to a collaborative RL;
performing the exploration process based on the configuration information to generate first exploration results;
sending, to at least one of the RL management function and a second RL agent, the first exploration results.

13. The method of claim 12, comprising:

receiving, from the RL management function, a RL strategy that defines an algorithm to determine one or more actions to be taken by the first RL agent in the context of the first exploration process;
performing the exploration process using the RL strategy.

14. An apparatus comprising

- at least one processor;
- at least one memory storing instructions that, when executed by the at least one processor, cause the apparatus to perform:

receiving, from at least one RL agent, information representative of exploration capabilities of the considered RL agent;
configuring, based on first information representative of exploration capabilities received from a first RL agent, the first RL agent with first exploration tasks of a first exploration process to be performed by the first RL agent to contribute to a collaborative RL;
receiving, from the first RL agent, first exploration results of the first exploration process;
processing the first exploration results and second exploration results of a second exploration process performed by a second RL agent to contribute to the collaborative RL.

15. An apparatus comprising

- at least one processor;
- at least one memory storing instructions that, when executed by the at least one processor, cause the apparatus to perform:

sending, to a RL management function, information representative of exploration capabilities of the first RL agent;

receiving configuration information for exploration tasks of an exploration process to be performed by the first RL agent to contribute to a collaborative RL;

performing the exploration process based on the configuration information to generate first exploration results;

sending, to at least one of the RL management function and a second RL agent, the first exploration results.

FIG. 1A

FIG. 1B

FIG. 2

| RLMF | gNB1 | gNB2 |
|------|------|------|

Initiate RL ~301

Inform RL initiation ~302
Request GEC

Inform RL initiation ~303
Request GEC

Send GEC ~304

Send GEC ~305

Select RL strategy for each RL agent ~306

Inform RL strategy ~307
Reporting rule

Inform RL strategy ~308
Reporting rule

Exploration results ~309

Exploration results ~310

Exploration results ~311

Update strategy ~312

FIG. 3

FIG. 4

FIG. 5

Sending a request for obtaining information representative of exploration capabilities to RL agents ~600

Receiving information representative of exploration capabilities from RL agents ~610

Determining whether one or more RL agent have capabilities to contribute to a collaborative RL ~620

Configuring one or more RL agents having capabilities to contribute to a collaborative RL ~630

Receiving exploration results ~640

Processing exploration results including the received exploration results ~650

Sending exploration results to at least one RL agent that has not enough capabilities to contribute to the collaborative RL ~660

FIG. 6

sending, to a RL management function, information representative of exploration capabilities ~700

receiving configuration information for exploration tasks of an exploration process to be performed ~710

performing the exploration process based on the configuration information to generate exploration results ~720

sending, to at least one of the RL management function and a second RL agent, the exploration results ~730

FIG. 7

FIG. 8

FIG. 9

Europäisches Patentamt

European Patent Office

Office européen des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LIU DA ET AL: "Multi-Agent Reinforcement Learning-Based Coordinated Dynamic Task Allocation for Heterogenous UAVs", IEEE TRANSACTIONS ON VEHICULAR TECHNOLOGY, IEEE, USA, vol. 72, no. 4, 9 December 2022 (2022-12-09), pages 4372-4383, XP011938892, ISSN: 0018-9545, DOI: 10.1109/TVT.2022.3228198 [retrieved on 2022-12-12] * figure 1 * * sections II, IV, and V.A * | 1-15 | INV. G06N20/00 G06F9/50 ADD. G06N3/092 G06N3/098 |
| A | ROBLES-ENCISO ALBERTO ET AL: "A multi-layer guided reinforcement learning-based tasks offloading in edge computing", COMPUTER NETWORKS, [Online] 21 November 2022 (2022-11-21), pages 1-14, XP093211530, DOI: https://doi.org/10.1016/j.comnet.2022.109476 Retrieved from the Internet: URL:https://www.sciencedirect.com/science/article/pii/S1389128622005102> [retrieved on 2024-10-03] * sections 3, 6 * * figures 1, 4 * | 1-15 | |

| TECHNICAL FIELDS SEARCHED (IPC) |
|---|
| G06N G06F |

The present search report has been drawn up for all claims

| Place of search | Date of completion of the search | Examiner |
|---|---|---|
| The Hague | 3 October 2024 | Theissing, Simon |

EPO FORM 1503 03.82 (P04C01)